Europäisches Patentamt

European Patent Office

Office européen des brevets

(19)

(11) Numéro de publication : **0 068 951**
**B2**

(12)    NOUVEAU FASCICULE DE BREVET EUROPÉEN

(45) Date de publication du nouveau fascicule du brevet : **30.11.88**

(51) Int. Cl.⁴ : **H 02 B 13/02**

(21) Numéro de dépôt : **82401045.8**

(22) Date de dépôt : **09.06.82**

(54) Cellule blindée à isolement gazeux pour poste électrique à moyenne tension.

(30) Priorité : **16.06.81 FR 8112181**

(43) Date de publication de la demande :
**05.01.83 Bulletin 83/01**

(45) Mention de la délivrance du brevet :
**02.10.85 Bulletin 85/40**

(45) Mention de la décision concernant l'opposition :
**30.11.88 Bulletin 88/48**

(84) Etats contractants désignés :
**BE CH DE GB IT LI NL SE**

(56) Documents cités :
**DE-B- 2 949 774**
**FR-A- 1 177 211**
**FR-A- 1 397 775**
**FR-A- 1 451 507**
**FR-A- 2 242 794**
**FR-A- 2 459 565**
**GB-A-   993 722**

(73) Titulaire : **MERLIN GERIN**
**Rue Henri Tarze**
**F-38050 Grenoble Cedex (FR)**

(72) Inventeur : **Micoud, Rober**
**Merlin Gerin rue Henri Tarze**
**F-38050 Grenoble Cedex (FR)**
Inventeur : **Ferton, Jean-Yves**
**Merlin Gerin Rue Henri Tarze**
**F-38050 Grenoble Cedex (FR)**
Inventeur : **Baube, Pascal**
**Merlin Gerin Rue Henri Tarze**
**F-38050 Grenoble Cedex (FR)**

(74) Mandataire : **Kern, Paul et al**
**Merlin Gerin Sce. Brevets 20, rue Henri Tarze**
**F-38050 Grenoble Cedex (FR)**

EP 0 068 951 B2

## Description

L'invention est relative à une cellule blindée à isolement gazeux décrit dans le préambule de la revendication 1.

Un dispositif de ce type est connu du document DE 1 221 708 concernant une installation de distribution blindée renfermant un interrupteur coulissant à deux positions, suspendu au couvercle de la cuve, sur lequel repose le mécanisme de commande des broches mobiles de l'interrupteur. L'une des extrémités de chaque broche est fixée directement au mécanisme, tandis que l'autre extrémité coopère avec un contact fixe lors des opérations de fermeture et d'ouverture. La structure simplifiée d'un tel dispositif ne permet pas de concilier les fonctions coupure, sectionnement et mise à la terre dans un même appareil.

Le document DE 2 949 774 décrit une installation de distribution à moyenne tension renfermant une association de sectionneur et de disjoncteur ou d'interrupteur sous charge pour assurer les trois positions de fermeture, d'ouverture et de mise à la terre. Les opérations de fermeture et d'ouverture interviennent exclusivement au moyen du disjoncteur lorsque le sectionneur est fermé dans la position de travail. En position de fermeture du disjoncteur, le sectionneur est verrouillé dans sa position de travail de manière à interdire toute ouverture sous charge par l'intermédiaire du sectionneur. La commande de mise à la terre du sectionneur provoque d'autre part le verrouillage temporaire du disjoncteur en position d'ouverture jusqu'à la venue en engagement du sectionneur avec le plot de mise à la terre. Le disjoncteur peut alors être fermé pour assurer la mise à la terre du câble de départ correspondant. Un tel dispositif nécessite deux appareils distincts pour assurer les trois fonctions d'interruption, de sectionnement et de mise à la terre. Un interverrouillage mécanique compliqué doit être agencé entre les deux appareils pour piloter leurs fonctionnements respectifs. L'ensemble présente une structure compliquée ayant un encombrement important.

Selon le dispositif décrit dans le document FR-A-2 459 565 relatif à une installation de distribution isolée au SF 6, et à blindage métallique, un interrupteur de puissance et un sectionneur d'aiguillage sont disposés dans une chambre commune ayant une première bride de raccordement à un système de jeu de barres, et une deuxième bride de raccordement à des conducteurs de départs.

Selon un autre dispositif connu, les pôles de chaque interrupteur sont disposés verticalement et alignés à l'intérieur de la cuve dans le sens de la profondeur. Cet agencement augmente l'encombrement et pose des problèmes de raccordement des pôles à partir de la face avant de la cuve.

La présente invention a pour but de remédier aux inconvénients précités et de permettre la réalisation d'une cellule à isolement gazeux, ayant une structure simplifiée et d'encombrement réduit autorisant un raccordement et une commande depuis la face avant.

La cellule selon l'invention est caractérisée en ce que la broche de chaque pôle est accouplée par une liaison mécanique interne à un mécanisme de manœuvre à trois positions stables, susceptible d'entraîner successivement la broche de l'interrupteur entre une position F de fermeture, une position O intermédiaire d'ouverture et d'isolement, et une position T de mise à la terre, la broche comprenant à ses extrémités opposées un premier contact coopérant en position F de fermeture avec un contact fixe solidaire du jeu de barres, et un deuxième contact venant en engagement en position T avec un plot de mise à la terre disposé à l'opposé du jeu de barres dans la direction verticale du pôle, et dans l'alignement de ladite broche.

La face postérieure de la cuve est sensiblement plane et comporte des moyens de fixation autorisant l'accrochage de la cellule à un transformateur ou à un mur.

L'interrupteur est actionné par un mécanisme de manœuvre disposé à l'extérieur de la cuve en étant assujetti à la face avant au-dessus de la nappe horizontale des traversées associées aux bornes de raccordement de la deuxième série.

Selon une caractéristique de l'invention, le plot de mise à la terre associé à chaque pôle est porté par un isolateur agencé sur la face supérieure de la cuve et est relié à la masse de la cuve par un conducteur de liaison extérieur à la cuve. L'isolateur du plot est formé par une cloche en matériau isolant transparent servant en position T de l'interrupteur, alternativement de hublot de visualisation de la broche permettant l'indication depuis l'extérieur de la mise à la terre du pôle, et après déconnexion du conducteur de mise à la terre, d'isolateur pour l'injection d'une tension test destinée à des essais diélectriques des câbles.

Selon une autre caractéristique, la traversée est fixée à la paroi interne de la cuve par un écrou en matériau conducteur entourant coaxialement le corps isolant et le conducteur et en étant isolé de la cuve par un revêtement, de manière à constituer à la fois un écran de potentiel et un diviseur capacitif dont un conducteur soudé à l'écrou est relié à un dispositif extérieur après avoir traversé la cuve.

D'autres avantages et caractéristiques ressortiront plus clairement de la description qui va suivre d'un mode de mise en œuvre de l'invention, donné à titre d'exemple non limitatif et représenté aux dessins annexés dans lesquels :

la figure 1 est une vue schématique en perspective d'une cellule blindée pour poste à moyenne tension selon l'invention, comprenant deux sous-ensembles arrivée avec boîtes à câbles, et un sous-ensemble départ associé à un coupe-circuit à fusible ;

la figure 2 est une vue en élévation de la cellule de la figure 1, les boîtes à câbles étant enlevées, et seul l'un des fusibles associé au pôle 18 R de l'interrupteur central étant représenté ;

la figure 3 représente le schéma électrique unifilaire de la cellule ;

les figures 4A et 4B sont des vues en coupe verticale selon la ligne IVA-IVA de la figure 2, le pôle 14 S d'un sous-ensemble arrivée étant respectivement associé à une boîte à câble, et un connecteur d'embrochage ;

la figure 4C est une vue en coupe selon la ligne IVC-IVC de la figure 2 ;

les figures 5A à 5C montrent les trois positions de chaque pôle d'interrupteur à autosoufflage, à savoir la position F de fermeture des contacts, la position intermédiaire O d'ouverture et d'isolement des contacts, et la position T de mise à la terre ;

la figure 6 est une vue partielle à échelle agrandie d'un détail de réalisation de la figure 4A.

Sur les figures, un tableau électrique préfabriqué 10 pour un poste à moyenne tension de distribution ou de transformation comporte une cellule blindée à isolation totale dont la cuve 12 métallique est au potentiel de la terre. La cuve 12 étanche présente une structure parallélépipédique et est remplie de gaz isolant à haute rigidité diélectrique, notamment du SF 6 à une pression voisine de la pression atmosphérique. Le tableau 10 comprend trois interrupteurs tripolaires 14, 16, 18 à autosoufflage agencés à l'intérieur de la cuve 12 pour réaliser l'alimentation d'un transformateur extérieur 19 à partir d'un réseau triphasé en boucle. Les interrupteurs 14, 16 forment deux sous-ensembles « arrivée » raccordés au réseau au moyen de câbles 20, 22 associés à des boîtes à câbles 24, 26 ou à des connecteurs d'embrochage 28. L'interrupteur 18 central coopère avec un jeu de coupe-circuit à fusibles 30 logé dans un compartiment auxiliaire 32 pour constituer un sous-ensemble « départ » et de protection du transformateur 19.

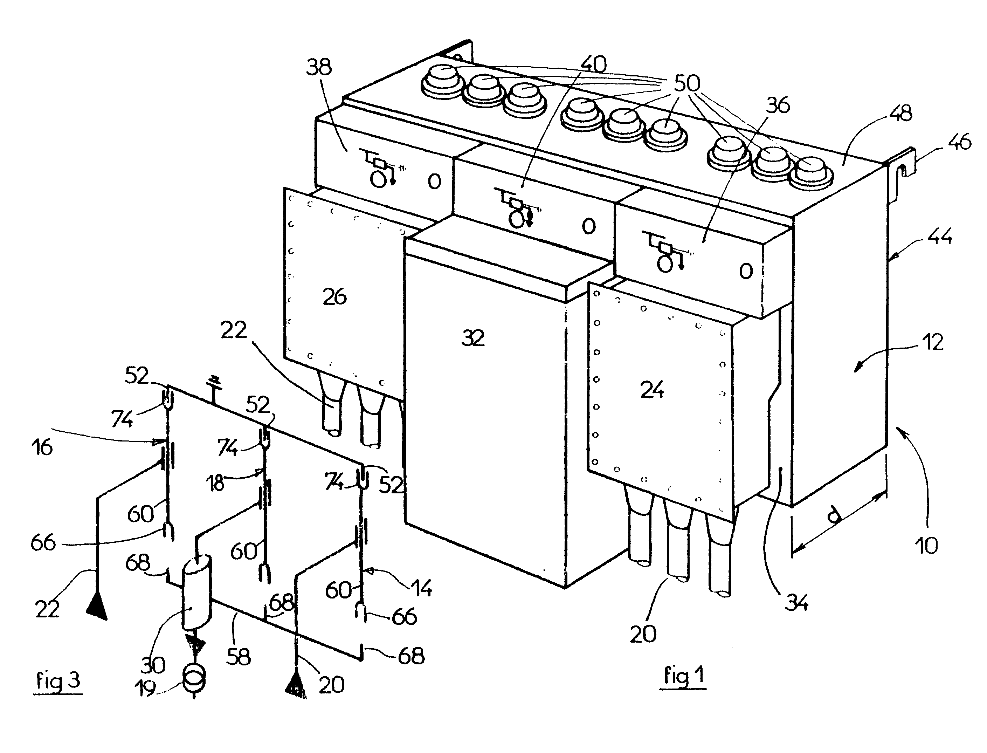

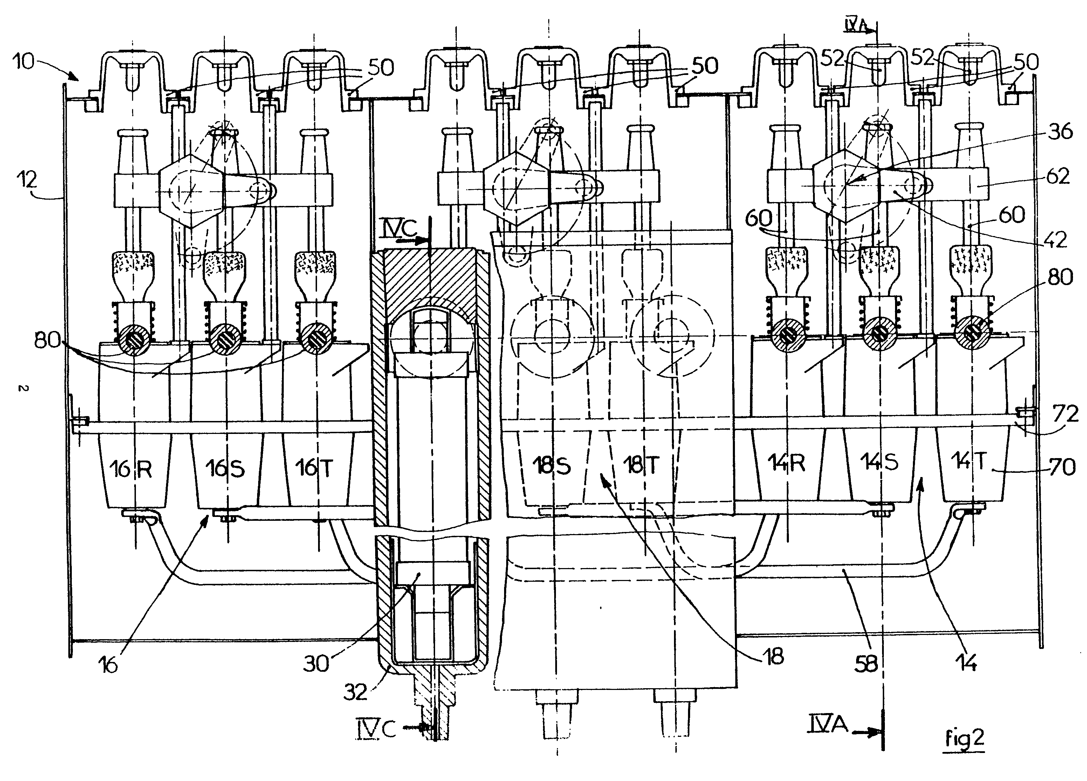

Les boîtes à câbles 24, 26 et les connecteurs d'embrochage 28 utilisés pour le raccordement des sous-ensembles arrivée au réseau sont agencés sur la face avant 34 à l'extérieur de la cuve 12 étanche. Il en est de même pour le compartiment auxiliaire 32 des coupe-circuit à fusibles 30 qui est formé par un puits allongé vertical rempli d'air et accolé extérieurement à la cuve 12 en étant intercalé entre les deux boîtes à câbles 24, 26 (fig. 1). Les neuf pôles 14 R, 14 S, 14 T ; 16 R, 16 S, 16 T ; 18 R, 18 S, 18 T des trois interrupteurs 14 à 18 à autosoufflage sont tous identiques, et s'étendent verticalement à l'intérieur de la cuve 12 en étant décalés transversalement les uns des autres par des intervalles réguliers pour former une rangée unique parallèle à la face avant (fig. 2).

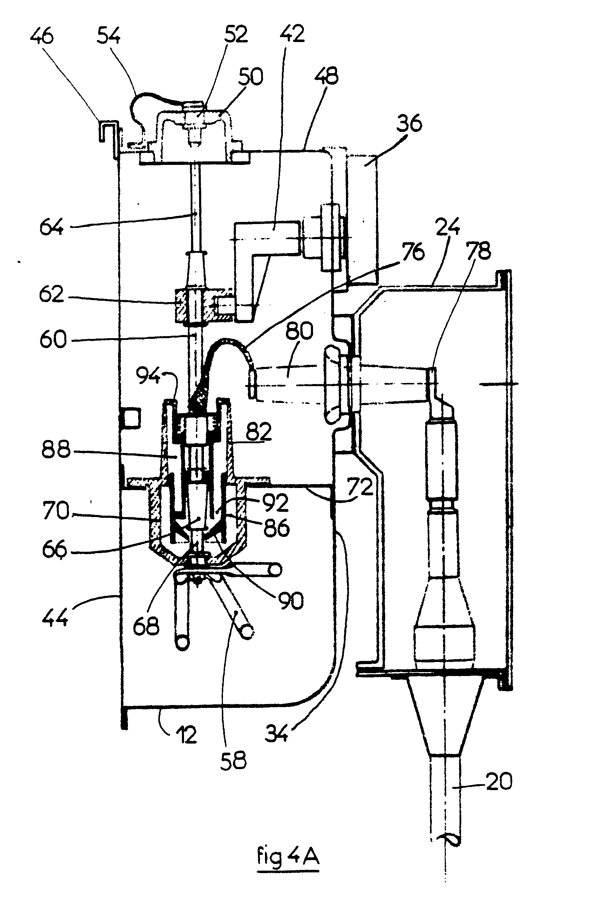

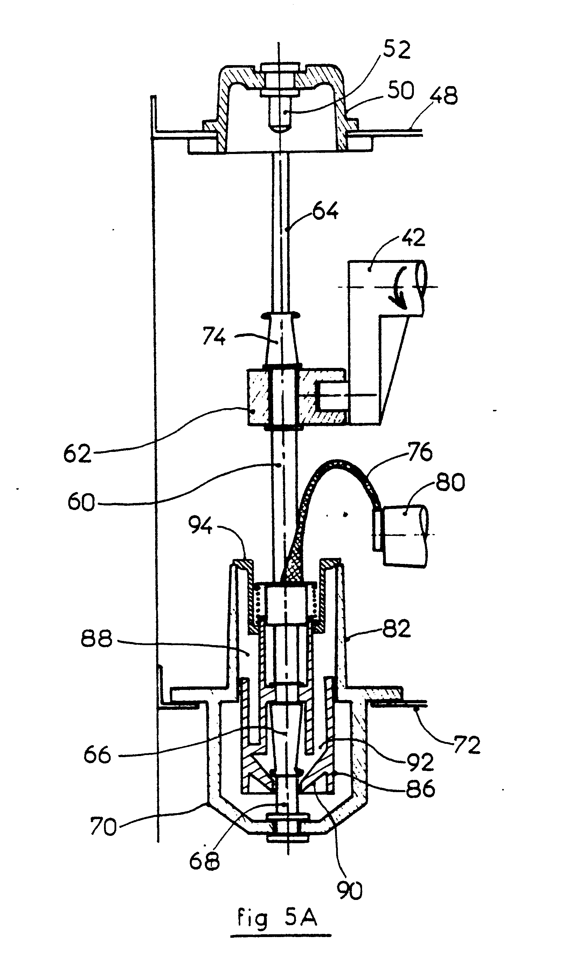

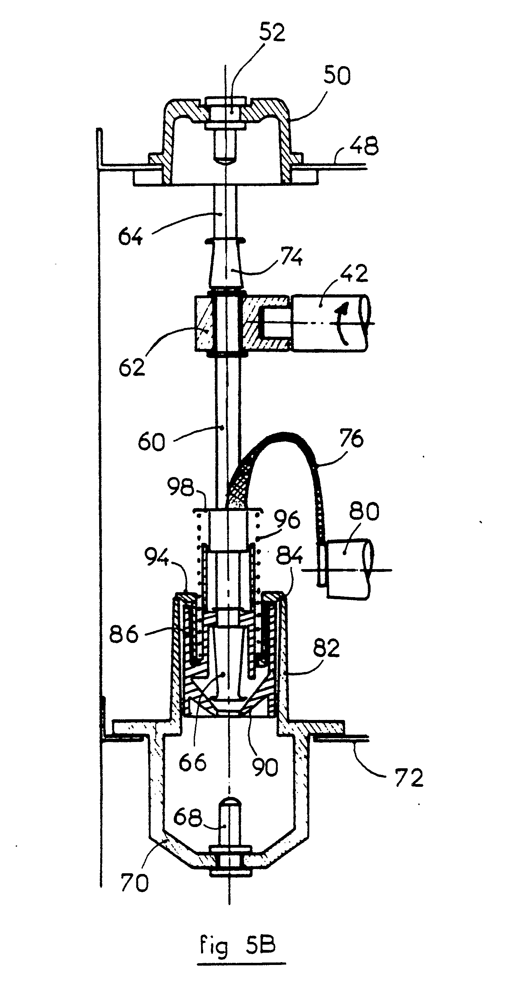

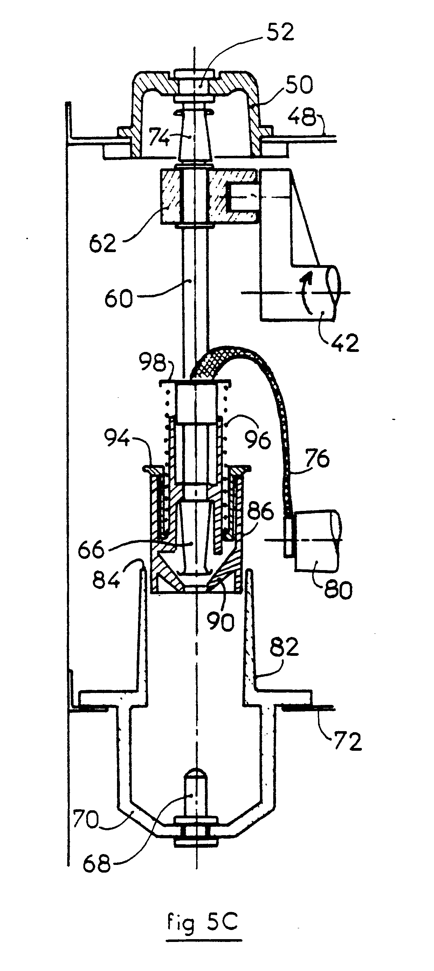

Chaque interrupteur 14, 16, 18 tripolaire est actionné par un mécanisme de manœuvre 36, 38, 40 accessible à la face avant 34 et disposé à l'extérieur de la cuve 12 respectivement au-dessus des boîtes à câbles 24, 26 et du compartiment auxiliaire 32 à fusibles 30 (fig. 1 et 4A). Le mécanisme de manœuvre 36, 38, 40, est accouplé à une manivelle de transmission 42 susceptible de déplacer l'équipage mobile des trois pôles de l'interrupteur associé 14, 16, 18 entre trois positions stables à savoir une première position F de service et de fermeture des contacts (fig. 5A), une deuxième position O intermédiaire d'ouverture (fig. 5B) et d'isolement et une troisième position T de mise à la terre (fig. 5C).

La rangée transversale unique de l'ensemble des pôles 14 R à 18 T permet d'utiliser une cuve 12 parallélépipédique compacte dont la profondeur d est réduite par rapport à la largeur. La face arrière 44 verticale de la cuve 12 est sensiblement plane et est dotée de moyens de fixation 46 pour l'accrochage du tableau 10 sur l'enveloppe du transformateur ou directement sur un mur.

La face supérieure 48 horizontale s'étendant perpendiculairement aux faces avant 34 et arrière 44 de la cuve 12 est coiffée par neuf isolateurs 50 en forme de cloches disposées selon une rangée transversale au-dessus des pôles 14 R à 18 T, chaque isolateur 50 étant équipé d'un plot 52 de mise à la terre du pôle correspondant. Chaque plot 52 est connecté à la cuve 12 métallique par une tresse de liaison 54. Les cloches 50 sont réalisées en un matériau isolant transparent permettant de visualiser la position de l'équipage mobile des interrupteurs 14 à 18. La position T de mise à la terre des sous-ensembles arrivée et départ du tableau 10 est facilement vérifiable grâce à la transparence des cloches 50. Après enlèvement de la tresse 54 de mise à la terre, il est également possible d'utiliser les cloches 50 pour des essais diélectriques des câbles en injectant des impulsions à haute tension, par exemple 50 kV, dans le plot 52 lorsque l'interrupteur 14 à 18 correspondant se trouve dans la position T. Chaque cloche 50 remplit ainsi deux fonctions distinctes en étant agencée en hublot de visualisation de la position T de mise à la terre et en isolateur d'essai diélectrique.

Les différents pôles 14 R à 18 T des interrupteurs tripolaires sont interconnectés électriquement par un jeu de barres triphasées 58 (fig. 4A) logé dans la partie inférieure de la cuve 12 en s'étendant parallèlement à la face avant 34 dans la direction transversale d'alignement des pôles. Les pôles 14 R à 18 T des interrupteurs à autosoufflage et à isolement par le SF 6 sont tous identiques, et seul l'un d'eux, associé à l'interrupteur 14, sera décrit en détail en référence aux figures 4A et 5A à 5C. Un tel interrupteur à trois positions distinctes permet de s'affranchir d'un sectionneur auxiliaire de mise à la terre et de sa commande entraînant de ce fait une diminution notable de l'encombrement du tableau.

Sur les figures 4A et 5A à 5C, chaque pôle de l'interrupteur 14 comporte une broche 60 mobile conductrice accouplée par un palonnier 62 en matériau isolant à la manivelle 42 du mécanisme de manœuvre 36. Le palonnier 62 coopère avec deux tiges verticales 64 de guidage de la broche 60 coulissante lors de son déplacement vertical en translation alternée entre les positions F de fermeture, O d'ouverture et T de mise à la terre. A l'une de ses extrémités la broche 60 conductrice comprend un premier contact à pince 66 coopérant en position F de fermeture (fig. 4A et 5A) avec un contact fixe 68 porté par un arceau 70 en matériau isolant. Le contact fixe 68 traverse l'arceau 70 et est conformé en plage de connexion du jeu de barres 58. Les arceaux 70 de tous les pôles sont solidarisés à un rail 72 métallique horizontal formant un châssis fixé à la paroi interne de la cuve 12 en s'étendant parallèlement au jeu de barres 58. A l'opposé du contact à pince 66, la broche 60 est pourvue d'un deuxième contact à pince 74 qui s'emboîte sur le plot 52 de l'isolateur 50 en position T de mise à la terre (fig. 5C). Ce deuxième contact 74 est avantageusement recouvert d'un moyen de repérage coloré facilitant la visualisation de la broche 60 à travers l'isolateur 50 transparent lorsque l'interrupteur se trouve en position T. Une tresse 76 de liaison connecte la broche 60 à une borne de raccordement 78 extérieure solidaire d'une traversée 80 étanche sortant perpendiculairement par la face avant 34 de la cuve 12.

L'arceau 70 isolant support du contact fixe 68 et du jeu de barres 58 porte au-dessus du rail 72 métallique une extension cylindrique agencée en cylindre 82 fixe extérieur à fond 84 ouvert obturable. Un piston 86 solidaire de la broche 60 mobile est monté à coulissement dans le cylindre 82 pour former le dispositif d'autosoufflage à volume 88 pistonnable engendrant une compression du gaz de soufflage lorsque l'interrupteur est actionné de la position F de fermeture vers la position intermédiaire O d'ouverture des contacts. Une tuyère 90 convergente est assujettie au piston 86 pour canaliser l'écoulement de gaz comprimé à travers des orifices 92 vers la zone de coupure et d'extension de l'arc tiré entre les contacts 68, 66. Ces derniers contacts sont conformés en contacts à emboîtement, de manière à se séparer après une course prédéterminée de la broche 60 mobile et du piston 86 créant ainsi une précompression du gaz dans le volume 88 au début de la course d'ouverture de l'interrupteur. En position F de fermeture, la tuyère 90 entoure radialement à faible jeu le contact fixe 68, de manière à obturer le volume 88 dans sa partie inférieure. Le fond 84 ouvert du cylindre 82 coopère avec une paroi 94 intermédiaire de forme annulaire qui obture la partie supérieure du volume 88 lorsque la broche 60 est entre les positions F et O. Un ressort de compression 96 intercalé entre une butée 98 de la broche 60 et un épaulement de la paroi 94, sollicite cette dernière en appui du fond 84 du cylindre 82. La paroi 94 reste ainsi en appui stable jusqu'à la position intermédiaire O de la broche 60 (fig. 5B), et est ensuite entraîné vers le haut par le piston 86 lors de la translation de la broche 60 vers la position T de mise à la terre (fig. 5c).

Un avantage important du tableau 10 est de permettre à partir de la face avant 34 de la cuve 12 le raccordement de câbles de différents types et s'étendant selon plusieurs directions. On remarque que l'ensemble des traversées 80 de raccordement des différents pôles 14 R à 18 T sont alignées sur une même rangée à mi-hauteur de la cuve 12 et sont de ce fait facilement accessibles depuis la face avant 34.

Sur la figure 4A, une boîte à câbles 24 tripolaire est connectée aux traversées 80 correspondantes de l'interrupteur 14 pour constituer un sous-ensemble arrivée alimenté par le réseau. Le départ des câbles 20 s'effectue vers le bas.

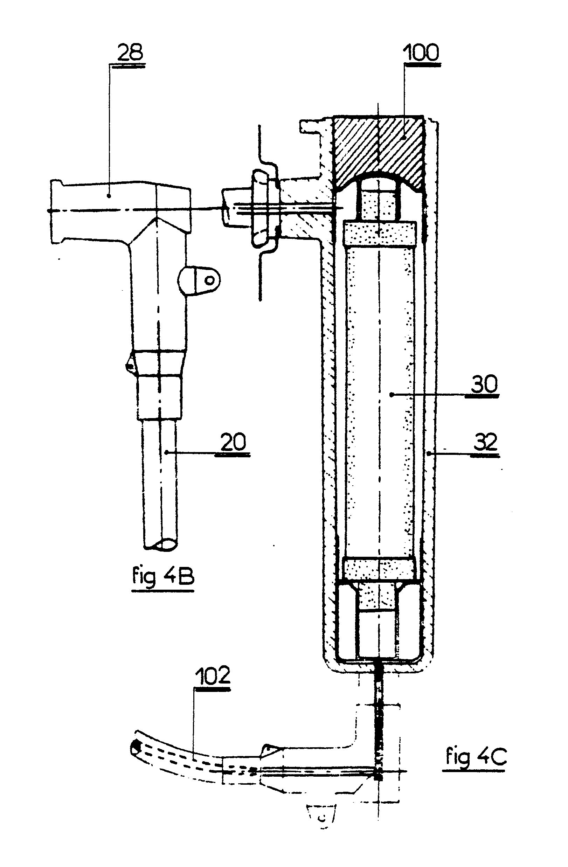

En référence à la figure 4B, la boîte à câbles 24 du sous-ensemble arrivée a été remplacée par des connecteurs 28 moulés coudés embrochables du type unipolaire ou tripolaire. Le départ des câbles 20 secs est également prévu vers le bas.

La figure 4C montre le compartiment auxiliaire 32 des coupe-circuit à fusibles 30 comprenant des plages de raccordement amont adaptable aux traversées 80 de l'interrupteur central 18 pour constituer le sous-ensemble départ. L'intérieur du compartiment 32 est rempli d'air et est obturé par un bouchon 100. Le départ des câbles 102 du côté des plages de raccordement aval des fusibles 30 est prévu vers l'arrière, mais pourrait bien entendu s'effectuer vers le bas.

Le rail métallique 72 du châssis support des pôles joue également le rôle d'anneau de masse à l'intérieur de la cuve 12 pour éviter tout amorçage intempestif entre les contacts de chaque pôle en position O d'isolement.

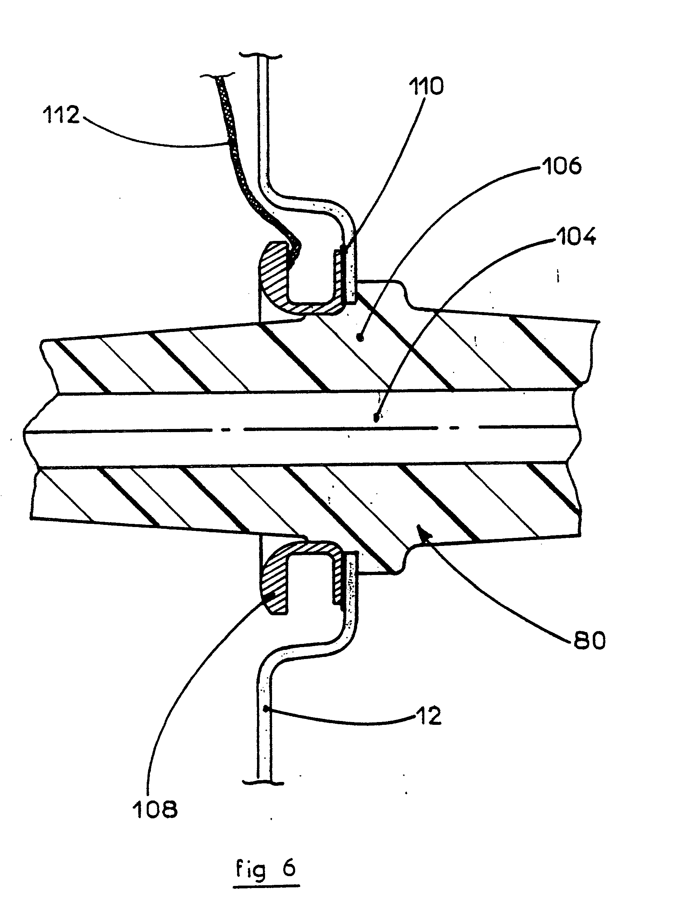

Sur la figure 6, la traversée 80 de raccordement de chaque pôle 14 R à 18 T est formée par un conducteur à haute tension 104 enrobé dans un corps 106 isolant traversant la cuve 12 métallique au potentiel de la terre. Un écran de potentiel 108 en matériau conducteur ou semi-conducteur est agencé à l'intérieur de la cuve 12 en entourant coaxialement le corps 106 et le conducteur 104. L'écran 108 est accolé par l'une de ses faces à la paroi interne de la cuve 12 avec interposition d'un joint 110 isolé, par exemple une colle. En plus de sa fonction de répartition du potentiel et d'écrou de fixation de la traversée sur la paroi interne de la cuve, l'écran 108 coopère avec le conducteur 104 et la cuve 12 pour former un diviseur capacitif. Un condensateur haute tension est constitué entre le conducteur 104 rectiligne et l'écran 108, et le condensateur basse tension est agencé entre l'écran 108 et la cuve 12 au niveau du joint 110 isolé. Il suffit de souder un conducteur 112 flexible de liaison à l'écran 108 et de relier ce conducteur 112 à un indicateur de présence de tension disposé à l'extérieur de la cuve 12.

Le fonctionnement d'un pôle 14 R à 18 T de l'un quelconque des interrupteurs tripolaires 14 à 18 est évident, et il suffit de remarquer qu'en position intermédiaire O d'ouverture des contacts 68, 66 (fig. 5B), la force de compression du ressort 96 est encore suffisante pour assurer l'appui de la paroi 94 contre le fond 84 du cylindre 82 d'autosoufflage. Lors du déplacement de la broche 60 de la position O vers la position T de mise à la terre (fig. 5C), le piston 86 entraîne la paroi 94 à l'écart du fond 84 dans le même sens que la broche 60. La position T de mise à la terre est facilement repérable de l'extérieur grâce à la transparence de l'isolateur 50.

Après déconnexion de la tresse 54 de liaison du plot 52 à la cuve 12, il est possible en position T de la broche 60 indiquée à la fig. 5C d'injecter une tension test au plot 52 pour réaliser des essais diélectriques des câbles.

**Revendications**

1. Cellule blindée à isolement gazeux pour poste électrique à moyenne tension comprenant une cuve (12) étanche métallique reliée au potentiel de terre, et remplie de gaz isolant électronégatif à rigidité diélectrique élevée, notamment de l'hexafluorure de soufre, ladite cuve (12) renfermant les pôles d'au moins un interrupteur (14, 16, 18) ayant une première série de bornes de raccordement interconnectées par un jeu de barres (58), et une deuxième série de bornes de raccordement traversant la cuve (12) pour coopérer avec des organes de connexion en liaison avec les câbles (20, 22, 102) du réseau ou du récepteur, les pôles (14 R à 18 T) étant identiques et disposés individuellement au-dessus du jeu de barres (58) ménagé à l'intérieur de la cuve (12), en étant décalés transversalement les uns des autres par des intervalles prédéterminés pour constituer une rangée verticale parallèle à la face avant (34) de la cuve (12) ayant une forme parallélépipédique, le jeu de barres (58) étant logé dans la partie inférieure de la cuve (12) en s'étendant dans la direction transversale d'alignement des pôles de la rangée, chaque pôle de l'interrupteur (14, 16, 18) comportant une broche (60) conductrice mobile montée à coulissement alterné dans le sens vertical et étant relié par une liaison électrique permanente à la borne de raccordement correspondante de la deuxième série, caractérisée en ce que la broche (60) de chaque pôle est accouplée par une liaison mécanique (62, 42) interne à un mécanisme de manœuvre (36, 38, 40) à trois positions stables, susceptible d'entraîner successivement la broche (60) de l'interrupteur entre une position F de fermeture, une position O intermédiaire d'ouverture et d'isolement et une position T de mise à la terre, la broche (60) comprenant à ses extrémités opposées un premier contact (66) coopérant en position F de fermeture avec un contact fixe (68) solidaire du jeu de barres (58), et un deuxième contact (74) venant en engagement en position T avec un plot (52) de mise à la terre disposé à l'opposé du jeu de barres (58) dans la direction verticale du pôle, et dans l'alignement de ladite broche.

2. Cellule blindée à isolement gazeux selon la revendication 1, dans laquelle lesdites bornes (78) de raccordement de la deuxième série sont agencées en traversées (80) étanches sortant perpendiculairement par la face avant (34) de la cuve (12) et réparties selon une nappe sensiblement horizontale, caractérisée en ce que la nappe est située à un niveau prédéterminé entre celui du jeu de barres (58) et des plots (52) de mise à la terre.

3. Cellule blindée à isolement gazeux selon la revendication 2, caractérisée en ce que le mécanisme de manœuvre (36, 38, 40) est disposé à l'extérieur de la cuve (12) en étant assujetti à la face avant (34) au-dessus des traversées (80) des pôles correspondants, et que la liaison mécanique entre chaque broche (60) et le mécanisme correspondant comporte un palonnier (62) associé à une manivelle (42).

4. Cellule blindée à isolement gazeux selon la revendication 1, 2 ou 3, caractérisée en ce que le plot (52) de mise à la terre associé à chaque pôle (14 R à 18 T) est porté par un isolateur, agencé sur la face supérieure de la cuve, le plot étant relié à la masse de la cuve (12) par un conducteur (54) de liaison extérieur à la cuve (12).

5. Cellule blindée à isolement gazeux selon la revendication 4, caractérisée en ce que l'isolateur support du plot (52) est formé par une cloche (50) en matériau isolant transparent servant en position T de l'interrupteur alternativement de hublot de visualisation de la broche (50) permettant l'indication depuis l'extérieur de la mise à la terre du pôle, et après déconnexion du conducteur (54) de mise à la terre, d'isolateur pour l'injection d'une tension test destinée à des essais diélectriques des câbles.

6. Cellule blindée à isolement gazeux selon la revendication 5, caractérisée en ce que le deuxième contact (74) de la broche (60) de chaque pôle est recouvert d'un moyen de repérage coloré et que la cloche (50) correspondante est agencée sur la face (48) horizontale supérieure de la cuve (12) en faisant saillie du mécanisme de commande (36, 38, 40).

7. Cellule blindée à isolement gazeux selon l'une des revendications 2 à 6, comprenant trois interrupteurs tripolaires (14, 16, 18) agencés à l'intérieur de la cuve (12) pour réaliser l'alimentation d'un transformateur à partir d'un réseau triphasé, caractérisée en ce que les traversées (80) des interrupteurs (14, 16) coopèrent avec des boîtes à câbles (24, 26) ou des connecteurs (28) d'embrochage pour former deux sous-ensembles arrivée, l'autre interrupteur (18) étant associé à un coupe-circuit à fusibles (30) logé dans un compartiment (32) auxiliaire rempli d'air et solidarisé à la face avant (34) de la cuve (12) pour constituer le sous-ensemble départ et de protection du transformateur.

8. Cellule blindée à isolement gazeux selon l'une quelconque des revendications précédentes, dans laquelle l'interrupteur (14, 16, 18) comporte un dispositif à autosoufflage, caractérisée en ce que le contact fixe (68) de chaque pôle de l'interrupteur (14, 16, 18) est porté par un arceau (70) en matériau isolant fixé à un support (72) métallique solidarisé à la paroi interne de la cuve (12) en s'étendant parallèlement au jeu de barres (58), l'arceau (70) étant prolongé au-dessus du support (72) par une extension isolante conformée en cylindre (82) fixe coopérant avec un piston (86) mobile accouplé à la broche (60) pour former le dispositif à autosoufflage à volume (88) pistonnable lors de la course de l'interrupteur de la position F de fermeture vers la positon O d'ouverture.

9. Cellule blindée à isolement gazeux selon la revendication 8, caractérisée en ce que le cylindre (82) comporte un fond (84) ouvert coopérant avec une paroi (94) intermédiaire pour obturer sous l'action d'un ressort (96) la partie supérieure du volume (88) lorsque la broche (60) se trouve entre les positions F et O, la paroi (94) étant ensuite écartée du fond (84) par le piston (86) lors de la translation de la broche (60) vers la position T de mise à la terre.

10. Cellule blindée à isolement gazeux selon l'une quelconque des revendications 2 à 9, dans laquelle la traversée (80) de raccordement de chaque pôle comprend un conducteur (104) raccordé à la broche (60) par une tresse (76), et enrobé dans un corps (106) isolant traversant la cuve (12) métallique au potentiel de la terre, caractérisée en ce que la traversée (80) est fixée à la paroi interne de la cuve (12) par un écrou (108) en matériau conducteur entourant coaxialement le corps (106) isolant et le conducteur (104) et en étant isolé de la cuve (12) par un revêtement (110) de manière à constituer à la fois un écran de potentiel et un diviseur capacitif dont un conducteur (112) soudé à l'écrou est relié à un dispositif extérieur après avoir traversé la cuve (12).

**Claims**

1. Metal-clad cell with gaseous insulation for medium voltage power station comprising a metal insulated tank (12) connected to earth, and filled with electronegative insulating gas having a high dielectric strength, especially sulfur hexafluoride, said tank (12) containing the poles of at least one switch (14, 16, 18) having a first series of connecting terminals interconnected by a bar system (58), and a second series of connecting terminals passing through the tank (12) to cooperate with connecting members to receptor or net cables (20, 22, 102), the poles (14R to 18) being identical and individually located above the bar system (58) accomodated inside the tank (12) being shifted crosswise from one another by predetermined gaps to form a vertical row parallel to the front (34) of the tank (12) shaped as a parallelipiped, the bar system (58) being located in the lower part of the tank (12) extending in cross-direction of alignment of the poles of the row, every pole of the switch (14, 16, 18) comprising a movable conducting pin (60) mounted in alternated sliding in vertical direction and connected by an electrical permanent link to the corresponding connecting terminal of the second series, characterized in that the pin (60) of each pole is coupled by a mechanical internal link (62, 42) to a switching operation mechanism (36, 38, 40) with three stationary positions, which can engage successively the pin (60) of the switch between a switch-on position F, an intermediate switch-off and insulation position O and an earthing position T, the pin (60) comprising to its opposite ends a first contact (66) cooperating in the switch-on position F with a fixed contact (68) linked together on to the bar system (58), and a second contact (74) being brought into engagement in position T with an earthing fixed contact (52) placed on the opposite side of the bar system (58) in vertical direction of the pole and aligned with said pin.

2. Metal-clad cell with gaseous insulation according to claim 1, in which said connecting terminals (78) of the second series are disposed in tight bushings (80) coming perpendicularly out of the front (34) of the tank (12) and placed according to an almost horizontal sheet, characterized in that the sheet is located at a predetermined level between this of the bar system (58) and this of the earthing fixed contacts (52).

3. Metal-clad celle with gaseous insulation according to claim 2, characterized by the fact that the mechanism of switching operation (36, 38, 40) is located outside the tank (12) and attached to the front (34) above the bushings (80) of the corresponding poles, and that the mechanical link between each pin (60) and the corresponding mechanism comprises a bar (62) associated with a crank (42).

4. Metal-clad cell with gaseous insulation according to claim 1, 2 or 3, characterized by the fact that the earthing fixed contact (52) related to each pole (14R to 18T) is supported by an insulator located on the upper face of the tank, the fixed contact being connected to the tank (12) frame by a connection conductor (54) outside the tank (12).

5. Metal-clad cell with gaseous insulation according to claim 4, characterized by the fact that the support insulator of the fixed contact (52) is carried by a bell (50) of transparent insulating material being used in position T of the switch alternatively as a hole to visualize the pin (50) permitting the indication of the pole earthing from outside, and after disconnection of the earthing conductor (54) as an insulator to inject a test voltage intended to dielectric tests of the cables.

6. Metal-clad cell with gaseous insulation according to claim 5, characterized by the fact that the second contact (74) of the pin (60) of every pole is coated by means of a colored marking and that the corresponding bell (50) is accomodated on the upper horizontal side (48) of the tank (12) projecting out of the mechanism of switching operation (36, 38, 40).

7. Metal-clad cell with gaseous insulation according to one of the claims 2 to 6, comprising three triple-pole switches (14, 16, 18) accomodated inside the tank (12) to provide the supply of a transformer from a three-phase system, characterized by the fact that the bushings (80) of two switches (14, 16) cooperate with cable boxes (24, 26) or plug-and-socket connectors (28) to form two income subgroups, the other switch (18) being associated with a fuse (30) located in an auxiliary compartment (32) air-filled and linked together on to the front (34) of the tank (12) to form the branch and protection sub-groups of the transformer.

8. Metal-clad cell with gaseous insulation according to any of the former claims in which the switch (14, 16, 18) comprises an auto-blowing device, characterized by the fact that the fixed contact (68) of every switch (14, 16, 18) pole is carried by an arch (70) of insulating material attached to a metallic support (72) linked together on to the inner wall of the tank (12) extending parallel to the bar system (58), the arch (70) being extended above the support (72) by an insulating extension (82) shaped as a fixed cylinder (82) cooperating with a movable piston (86) coupled to the pin (60) to form the auto-blowing device with a puffer volume, during the switch stroke from the switch-on position F towards the switch-off position O.

9. Metal-clad cell with gaseous insulation according to claim 8, characterized by the fact that the cylinder (82) comprises an opened head (84) cooperating with an intermediate wall (94) to obturate the upper part of the volume (88) under the action of a spring (96) when the pin (60) lies between the positions F and O, then the wall (94) being removed from the head (84) by the piston (86) during the pin (60) translation towards the earthing position T.

10. Metal-clad cell with gaseous insulation according to any of the claims 2 to 9, in which the connection bushing (80) of every pole comprises a conductor (104) connected to the pin (60) by a braid (76) and inserted in an insulating element (106) passing through the earthed metallic tank (12), characterized by the fact that the bushing (80) is attached to the inner wall of the tank (12) by a nut (108) of conducting material surrounding coaxially the insulating element (106) and the conductor (104) and being insulated from the tank (12) by a coating (110) so to create at once a potential shield and a capacity divider of which a conductor (112) welded to the nut is connected to an outer device after having passed through the tank (12).


**Patentansprüche**

1. Gasisolierte gekapselte Zelle für elektrische Mittelspannungsanlage mit einem dichten Metallbehälter (12), der mit dem Erdpotential verbunden ist und der mit elektronegativem Isoliergas von hoher dielektrischer Festigkeit gefüllt ist, insbesondere mit Schwefelhexafluorid, wobei der genannte Behälter (12) die Pole von mindestens einem Schalter (14, 16, 18) enthält, mit einer ersten Serie von durch Sammelschienen (58) miteinander geschalteten Anschlussklemmen, und einer zweiten Serie den Behälter (12) durchqueren Anschlussklemmen, um mit den Verbindungsorganen zusammenzuarbeiten, die mit den Netz- oder Empfangskabeln (20, 22, 102) in Verbindung sind, wobei die Pole (14R bis 18T) identisch sind und einzeln oberhalb der Sammelschiene (58) angeordnet sind, die im Innern des Behälters (12) vorgesehen ist, wobei die transversal durch vorherbestimmte Zwischenräume voneinander versetzt sind, um eine senkrechte Reihe zu bilden, die parallel zu der Vorderseite (34) des quaderförmigen Behälters (12) ist, wobei die Sammelschiene (58) in dem unteren Teil des Behälters (12) angebracht ist und sich in die transversale Fluchtlinienrichtung der Reihenpole erstreckt, wobei jeder Pol des Schalters (14, 16, 18) einen beweglichen leitfähigen, abwechselnd in der senkrechten Richtung verschiebbar montierten Stift (60) aufweist und durch eine dauernde elektrische Verbindung mit der entsprechenden Anschlussklemme der zweiten Serie verbunden ist, dadurch gekennzeichnet, dass der Stift (60) jedes Pols durch eine mechanische innere Verbindung (62, 42) mit einem, drei feste Stellungen aufweisenden Betätigungsmechanismus (36, 38, 40) verbunden ist, der aufeinanderfolgend den Stift (60) des Schalters von einer Schliess-Stellung F in eine mittlere Öffnungs- und Isolierstellung O und eine Erdleitungs-Stellung T bringen kann, wobei der Stift (60) an seinen entgegengesetzten Enden einen ersten Kontakt (66) aufweist, der in der Schliess-Stellung F mit einem feststehenden Kontakt (68) zusammenarbeitet, der mit der Sammelschiene (58) verbunden ist, und einen zweiten Kontakt (74), der in der Stellung T mit einem Erdungskontakt (52) zusammenkommt, der gegenüber der Sammelschiene (58) in der senkrechten Richtung des Pols und mit dem genannten Stift ausgerichtet angebracht ist.

2. Gasisolierte gekapselte Zelle gemäss Anspruch 1, in der die genannten Anschlussklemmen (78) der zweiten Serie als dichte Durchführungen (80) ausgebildet sind, die senkrecht aus der Vorderseite (34) des Behälters (12) herauskommen und gemäss einer ungefähr waagerechten Schicht verteilt sind, dadurch gekennzeichnet, dass sich die Schicht auf einer vorherbestimmten Höhe befindet, zwischen der Höhe der Sammelschienen (58) und der Höhe der Erdungskontakte (52).

3. Gasisolierte gekapselte Zelle gamäss Anspruch 2, dadurch gekennzeichnet, dass der Betätigungsmechanismus (36, 38, 40) ausserhalb des Behälters (12) angeordnet ist und an der Vorderseite (34) über den Durchführungen (80) der entsprechenden Pole befestigt ist, und dass die mechanische Verbindung zwischen jedem Stift und dem entsprechenden Mechanismus eine mit einer Kurbel (42) verbundene Traverse (62) aufweist.

4. Gasisolierte gekapselte Zelle gemäss Anspruch 1, 2 oder 3, dadurch gekennzeichnet, dass der jedem Pol (14R-18T) zugeordnete Erdungskontakt (52) von einem auf der oberen Seite des Behälters angeordneten Isolator getragen wird, wobei der Erdungskontakt durch einen Verbindungsleiter (54) ausserhalb des Behälters (12) mit der Masse des Behälters (12) verbunden ist.

5. Gasisolierte gekapselte Zelle gemäss Anspruch 4, dadurch gekennzeichnet, dass der Tragisolator des Erdungskontaktes (52) von einer Glocke aus durchsichtigem Isoliermaterial gebildet wird, welche in der Stellung T des Schalters abwechselnd als Blickfenster für den Stift (60) dient und von aussen die Anzeige der Erdung des Poles erlaubt, und nach Abschaltung des Erdungsleiters (54) als Isolator dient zur Eingabe einer Versuchsspannung für dielektrische Kabelversuche.

6. Gasisolierte gekapselte Zelle gemäss Anspruch 5, dadurch gekennzeichnet, dass der zweite Kontakt (74) des Stiftes (60) jedes Poles von einem farbigen Markierungszeichen bedeckt ist, und dass die entsprechende Glocke (50) auf der waagerechten oberen Seite (48) des Behälters (12) angebracht ist und aus dem Betätigungsmechanismus (36, 38, 40) hervorspringt.

7. Gasisolierte gekapselte Zelle gemäss einem der Ansprüche 2-6, mit drei dreipoligen im Innern des Behälters (12) angeordneten Schaltern (14, 16, 18), um die Versorgung eines Transformators von einem Dreiphasennetz aus zu verwirklichen, dadurch gekennzeichnet, dass die Durchführungen (80) der Schalter (14, 16) mit den Kabelkästen (24, 26) oder den Steckverbindungen (28) zusammenarbeiten, um zwei Eingangs-Untergruppen zu bilden, wobei der andere Schalter (18) mit einer Schmelzdrahtsicherung (30) verbunden ist, die in einem mit Luft gefüllten Hilfsbehälter (32) gelagert ist und mit der Vorderseite (34) des Behälters (12) verbunden ist, um die Ausgangs- und Schutz-Untergruppe des Transformators zu bilden.

8. Gasisolierte gekapselte Zelle gemäss einem der vorhergehenden Ansprüche, in welcher der Schalter (14, 16, 18) eine Selbstblasvorrichtung aufweist, dadurch gekennzeichnet, dass der feststehende Kontakt (68) von jedem Pol des Schalters (14, 16, 18) von einem Bogen (70) aus Isoliermaterial getragen wird, der an einem Metallträger (72) befestigt ist, welcher mit der Innenwand des Behälters (12) verbunden ist und sich parallel zu den Sammelschienen (58) erstreckt, wobei der Bogen (70) über dem Träger (72) durch eine als fester Zylinder (82) ausgeführte isolierende Ausdehnung verlängert ist, die mit einem mit dem Stift (60) gekuppelten beweglichen Kolben (86) zusammenarbeitet, um die Selbstblasvorrichtung zu bilden mit einem kompressierbaren Volumen (88) während der Bewegung des Schalters von der Schliess-Stellung F in die Öffnungs-Stellung O.

9. Gasisolierte gekapselte Zelle gemäss dem Anspruch 8, dadurch gekennzeichnet, dass der Zylinder (82) einen offenen Boden (84) aufweist, der mit einer Zwischenwand (94) zusammenarbeitet, um unter der Wirkung einer Feder (96) den oberen Teil des Raumes (88) zu verschliessen, wenn der Stift (60) sich zwischen den Stellungen F und O befindet, wobei die Wand (94) dann von dem Boden (84) durch den Kolben (86) entfernt wird, während der Verschiebung des Stiftes (60) zur Erdungs-Stellung T hin.

10. Gasisolierte gekapselte Zelle gemäss einem der Ansprüche 2-9, in welcher die Anschluss-Durchführung (80) jedes Poles einen Leiter (104) aufweist, der mit dem Stift (60) durch ein Band (76) verbunden ist, und der von einem Isolierkörper (106) umschlossen ist, welcher den Erdpotential-Metallbehälter (12) durchquert, dadurch gekennzeichnet, dass die Durchführung (80) an der Innenwand des Behälters (12) mit einer Schraube aus Leitfähigem Material befestigt ist, die den Isolierkörper (106) und den Leiter (104) koaxial umgibt, und dabei von dem Behälter (12) durch eine Beschichtung (110) isoliert ist, um gleichzeitig einen Potential-Schutzschirm und einen kapazitiven Teiler zu bilden, von dem ein an die Schraube geschweisster Leiter (112) mit einer Aussenvorrichtung verbunden ist nach Durchquerung des Behälters (12).

fig 1

fig 3

fig 2

IVA

50

52 52 50

36

62

60 60

42

80

72

70

80

80

16R 16S 16T

18S 18T

14R 14S 14T

IVC

IVC

16

30

32

IVC

18

58

14

IVA IVA

10

12

2

0 068 951

fig 4A

28

100

20

30

32

fig 4B

102

fig 4C

fig 5A

fig 5B

fig 5C

fig 6